# EUROPÄISCHE PATENTSCHRIFT

(11) **EP 3 430 628 B1**
(45) Veröffentlichungstag und Bekanntmachung des Hinweises auf die Patenterteilung: **08.04.2020**
(21) Anmeldenummer: 17708242.7
(22) Anmeldetag: 01.03.2017
(51) Int. Cl.: G21F 9/00

(54) **VERFAHREN ZUR BEHANDLUNG VON ABWASSER AUS DER DEKONTAMINATION EINER METALLOBERFLÄCHE IN EINEM PRIMÄRKÜHLMITTELKREISLAUF EINES KERNREAKTORS, KERNREAKTOR-ABWASSERBEHANDLUNGSVORRICHTUNG UND VERWENDUNG DER KERNREAKTOR-ABWASSERBEHANDLUNGSVORRICHTUNG**
PROCESS FOR TREATMENT OF WASTE WATER FROM THE DECONTAMINATION OF A METAL SURFACE FROM THE PRIMARY COOLING CIRCUIT OF A NUCLEAR REACTOR, NUCLEAR REACTOR WASTE WATER TREATMENT DEVICE AND USE OF THIS DEVICE
PROCÉDÉ POUR LE TRAITEMENT DE L'EAU USÉE DE LA DÉCONTAMINATION D'UNE SURFACE MÉTALLIQUE D'UN CIRCUIT PRIMAIRE DE REFROIDISSEMENT D'UN RÉACTEUR NUCLÉAIRE, DISPOSITIF D'UN RÉACTEUR NUCLÉAIRE POUR LE TRAITEMENT DE L'EAU USÉE ET USAGE D'UN TEL DISPOSITIF

(30) Priorität: 16.03.2016 DE 102016104846
(43) Veröffentlichungstag der Anmeldung: 23.01.2019
(73) Patentinhaber: FRAMATOME GMBH, 91052 Erlangen (DE)
(72) Erfinder: TOPF, Christian, 91301 Forchheim (DE); SEMPERE BELDA, Luis, 91052 Erlangen (DE)
(74) Vertreter: Lavoix
(86) Internationale Anmeldenummer: PCT/EP2017/054817
(87) Internationale Veröffentlichungsnummer: WO 2017/157668

(56) Entgegenhaltungen:
- EP-A1- 0 406 098
- DE-A1- 19 818 772
- DE-B3-102013 100 933

## Beschreibung

Die Erfindung betrifft ein Verfahren zur Behandlung von Abwasser aus der Dekontamination einer Metalloberfläche in einem Primärkühlmittelkreislauf eines Kernreaktors, eine Kernreaktor-Abwasserbehandlungsvorrichtung sowie die Verwendung der Kernreaktor-Abwasserbehandlungsvorrichtung bei einem Verfahren zur Dekontamination einer Metalloberfläche in einem Primärkühlmittelkreislauf eines Kernreaktors.

Kernreaktoren umfassen einen Reaktorbehälter, in dem Kernbrennstoff enthaltende Brennelemente angeordnet sind. Am Reaktorbehälter ist ein den Primärkühlmittelkreislauf bildendes Röhrensystem angeschlossen, das mit wenigstens einer Kühlmittelpumpe und, im Falle eines Druckwasserreaktors (DWR) oder Schwerwasserreaktors, mit einem Dampferzeuger verbunden ist.

Das Röhrensystem des Kühlmittelkreislaufs besteht üblicherweise aus rostfreien austenitischen FeCrNi-Stählen. Die Wärmeaustauscheroberflächen der Dampferzeuger können aus Ni-Legierungen gebildet sein. Für Kühlmittelpumpen und andere Bauteile werden ferner Kobaltstähle und/oder Gusswerkstoffe verwendet. Unter den Bedingungen des Leistungsbetriebes eines Kernreaktors zeigen alle diese Werkstoffe eine gewisse Löslichkeit in Wasser. Aus den Legierungen herausgelöste Metallionen gelangen mit dem Kühlmittelstrom zum Reaktorbehälter, wo sie durch die dort herrschende Neutronenstrahlung teilweise in radioaktive Nuklide umgewandelt werden. Die Nuklide werden wiederum vom Kühlmittelstrom im gesamten Kühlmittelsystem verteilt und lagern sich in Oxidschichten ein, die sich während des Betriebs des Kernreaktors auf den Metalloberflächen des Kühlmittelsystems bilden.

Mit zunehmender Betriebsdauer summiert sich die Menge der abgelagerten aktivierten Nuklide, so dass die Radioaktivität bzw. die Dosisleistung an den Bauteilen des Kühlmittelsystems zunimmt. Die Oxidschichten enthalten je nach Art der für ein Bauteil verwendeten Legierung als Hauptbestandteil Eisenoxid mit zwei- und dreiwertigem Eisen sowie Oxide anderer Metalle wie Chrom und Nickel, die als Legierungsbestandteile in den oben erwähnten Werkstoffen vorhanden sind.

Bevor Kontroll-, Wartungs-, Reparatur- und Rückbaumaßnahmen an den Bauteilen der Reaktorsysteme vorgenommen werden können, ist eine Reduzierung der radioaktiven Strahlung der jeweiligen Bauteile bzw. Komponenten erforderlich, um die Strahlungsbelastung des Personals zu verringern. Dies geschieht dadurch, dass die auf den Oberflächen der Bauteile vorhandene Oxidschicht mittels eines Dekontaminationsverfahrens möglichst vollständig entfernt wird. Die Dekontamination kann als vollständige Anlagendekontamination (Full System Decontamination - FSD) durchgeführt werden. Dazu wird entweder das gesamte Kühlmittelsystem oder ein durch Ventile abgetrennter Teil des Systems mit einer wässrigen Reinigungslösung gefüllt und dekontaminiert. Bei einer Teildekontamination können einzelne Bauteile des Systems in einem separaten, die Reinigungslösung enthaltenden Behälter behandelt werden.

Im Falle einer vollständigen Anlagendekontamination (FSD) kann es sinnvoll sein, die Behandlungslösungen mittels der kraftwerkseigenen Pumpen, wie beispielsweise der Hauptkühlmittelpumpen, im Primärkühlmittelkreislauf zu zirkulieren und die im Primärkühlmittelkreislauf vorhanden kraftwerkseigenen Einrichtungen zur Druck- und Temperatursteuerung zu verwenden. Um die Kühlmittelpumpen zu betreiben, müssen diese zur internen Kühlung der Dichtungspartien mit Sperrwasser versorgt werden, das hierbei in das Primärkühlmittel abgegeben wird. Das hierfür notwendige Sperrwasser wird entweder über die betrieblichen Systeme des Kraftwerks in einem internen Sperrwasserkreislauf oder durch eine externe Versorgung mit Deionat bereitgestellt. Die externe Sperrwasserversorgung erfolgt aus verfahrenstechnischen Gründen vornehmlich während der Oxidationsphase des Dekontaminationsprozesses. Dabei wird dem Primärkühlmittelkreislauf externes Sperrwasser bevorzugt in Deionatqualität zugeführt. Da während der Anlagendekontamination im geschlossenen Primärkühlmittelkreislauf nur eine sehr begrenzte Menge des extern zugeführten Sperrwassers aufgenommen werden kann, muss eine der zugeführten Sperrwassermenge entsprechende Menge der Behandlungslösung als Abwasser wieder aus dem System abgeführt werden. Die abgeführte Behandlungslösung wird üblicherweise betrieblich in einem Verdampfer eingeengt, um die Menge von radioaktiv belastetem Abwasser gering zu halten.

Der externe Sperrwassereintrag in das Kühlmittelsystem während der Oxidationsphase einer vollständigen Anlagendekontamination kann mehrere m³/h betragen. Daher müssen große Verdampferkapazitäten vorgehalten werden, um die anfallenden Mengen von bis zu mehreren hundert Kubikmetern Behandlungslösung zu verdampfen. Neben den hohen Investitionskosten für den Verdampfer entstehen weitere Kosten durch den hohen Energieverbrauch beim Verdampfungsprozess. Bei Schwerwasserreaktoren, in denen schweres Wasser als Kühlmittel eingesetzt wird, entstehen zusätzliche Kosten dadurch, dass als Sperrwasser nur teures schweres Wasser verwendet werden kann und beim Verdampfen der Behandlungslösung hohe Schwerwasserverluste mit der bisherigen Technik auftreten können. Bei diesem Reaktortyp ist daher eine vollständige Anlagendekontamination nicht wirtschaftlich durchführbar.

Aufgabe der Erfindung ist es, ein Verfahren zur Behandlung des bei der Dekontamination einer Metalloberfläche im Primärkühlmittelkreislauf eines Kernreaktors anfallenden Abwassers bereitzustellen, das kosteneffizienter ist und weniger radioaktiven Abfall produziert.

Zur Lösung der Aufgabe ist ein Verfahren zur Behandlung von Abwasser aus der Dekontamination einer Metalloberfläche in einem Primärkühlmittelkreislauf eines Kernreaktors vorgesehen, welches die folgenden Schritte umfasst:
a) ein Oxidationsmittel wird unter Bildung einer Oxidationslösung im Primärkühlmittelkreislauf eingebracht und die Oxidationslösung im wird Primärkühlmittelkreislauf zirkuliert, um die Oxidationslösung in Kontakt mit der Metalloberfläche zu bringen, und
b) eine vorbestimmte Menge der Oxidationslösung wird während oder nach Schritt a) aus dem Primärkühlmittelkreislauf in eine mit dem Primärkühlmittelkreislauf verbundene Reduktionsstrecke abgeleitet,
c) das Oxidationsmittel wird in der Reduktionsstrecke mit einem Reduktionsmittel unter Bildung einer Reaktionslösung umgesetzt, die von dem Oxidationsmittel befreit ist,
d) die Reaktionslösung wird über ein lonenaustauscherharz geleitet, um eine entsalzte Lösung zu bilden, und
e) die entsalzte Lösung wird in das Primärkühlmittel zurückgeleitet und/oder zwischengespeichert und/oder entsorgt.

Schritt a) des erfindungsgemäßen Abwasserbehandlungsverfahrens entspricht dem Oxidationsschritt innerhalb der üblichen Anwendung eines Dekontaminationsverfahrens. Durch das erfindungsgemäße Verfahren wird die, während oder nach der Durchführung des Oxidationschrittes aus dem Primärkühlmittelkreislauf abgeleitete Oxidationslösung aufbereitet und kann in den Dekontaminationsprozess zurückgeführt werden, ohne dass eine aufwändige Nachbehandlung oder/und Verdampfung erforderlich ist. Ferner werden durch das Verfahren im Vergleich zum Stand der Technik nur geringe Mengen an Abfall generiert, wodurch das Verfahren nicht nur ökonomische, sondern auch ökologische Vorteile bietet.

Die Erfinder haben erkannt, dass eine auf den Oxidationsschritt des Dekontaminationsverfahrens folgende Abwasserbehandlung dazu geeignet ist, das durch den Betrieb der Kühlmittelpumpen in das Kühlsystem eingetragene Sperrwasservolumen aus dem System zu entfernen und so aufzubereiten, dass eine Rückführung in das Kühlsystem oder eine kostengünstige Entsorgung möglich ist. Die Behandlung des im abgeleiteten Teil des Primärkühlmittels vorhandenen Oxidationsmittels mit einem Reduktionsmittel beinhaltet eine im Allgemeinen schnell ablaufende Redoxreaktion, die so gesteuert werden kann, dass eine effektive Umsetzung der Reaktionspartner zu definierten Abbauprodukten in kurzer Zeit erreicht wird. Die entstehende Reaktionslösung eignet sich aufgrund der geringen lonenfracht zur Aufbereitung mit Ionenaustauschern, die für die Durchführung des Dekontaminationsverfahrens ohnehin benötigt werden und auch als kraftwerkseigene Einrichtung zur Verfügung stehen. Damit kann die Entstehung von zusätzlichen, radioaktiv belasteten Abfällen wie beispielsweise Verdampferkonzentrat verringert bzw. vermieden werden.

Im Sinne der Erfindung bedeutet "von dem Oxidationsmittel befreit", dass die Konzentration des Oxidationsmittels in der Reaktionslösung einen für das lonenaustauscherharz unbedenklichen Wert aufweist und vorzugsweise unterhalb von 5 mg/kg liegt. Vorzugsweise wird das Reduktionsmittel im geringfügigen Überschuss verwendet, um die vollständige Umsetzung des Oxidationsmittels sicherzustellen.

Als Oxidationsmittel können Ce⁴⁺, Permanganate wie Permangansäure und deren Alkalimetallsallze, H₂S₂O₈, und deren Salze oder O₃ verwendet werden. Gemäß einer bevorzugten Ausführungsform ist das Oxidationsmittel ein Permanganat, vorzugsweise Permangansäure. Permanganate sind leicht verfügbar und als Oxidationsmittel für Dekontaminationsverfahren technisch bereits erprobt.

Gemäß einer bevorzugten Ausführungsform ist das im erfindungsgemäßen Abwasserbehandlungsverfahren eingesetzte Reduktionsmittel eine aliphatische Dicarbonsäure wie Ascorbinsäure, Zitronensäure oder Oxalsäure und deren Mischungen, besonders bevorzugt Oxalsäure. Oxalsäure ist ein bekannt guter Komplexbildner für die im Oxidationsschritt von den Oxidschichten auf der Metalloberfläche abgelösten Metallionen. Außerdem lässt sich Oxalsäure rückstandsfrei aus der Reaktionslösung entfernen, da als Umsetzungsprodukt nur Kohlendioxid und Wasser entsteht.

Der Primärkühlmittelkreislauf kann wenigstens eine Kühlmittelpumpe mit einer Sperrwasserversorgung umfassen. Das der Kühlmittelpumpe zugeführte Sperrwasser wird in das Primärkühlmittel abgegeben. Die vorbestimmte Menge der Oxidationslösung, die während oder nach dem Oxidationsschritt aus dem Primärkühlmittelkreislauf abgeleitet wird, entspricht bevorzugt der Menge des dem Primärkühlmittel zugeführten Sperrwassers. Besonders bevorzugt entspricht ein Volumenstrom der in die Reduktionsstrecke abgeleiteten Oxidationslösung einem Volumenstrom des während des Oxidationsschritts von der Kühlmittelpumpe in das Primärkühlmittel abgegebenen Sperrwassers. Hierdurch wird die Primärkühlmittelmenge im Kühlsystem konstant gehalten und ein definierter Durchfluss in der Reduktionsstrecke eingestellt. Außerdem kann auf diese Weise eine kontinuierliche Aufbereitung der abgeleiteten Oxidationslösung sowie gleichzeitig eine konstante Füllmenge im Primärkühlmittelkreislauf sichergestellt werden.

In einer alternativen Ausführungsform kann die in die Reduktionsstrecke abgeleitete Oxidationslösung in einem Pufferbehälter zwischengespeichert und chargenweise in der Reduktionsstrecke aufbereitet werden.

Weiter bevorzugt wird das Volumen der Reduktionsstrecke an eine Reaktionszeit der Umsetzung des Oxidationsmittels mit dem Reduktionsmittel angepasst, um eine im Wesentlichen vollständige Umsetzung des Oxidationsmittels mit dem Reduktionsmittel in der Reduktionsstrecke zu gewährleisten, bevor die vom Oxidationsmittel befreite Reaktionslösung dem Ionenaustauscher zugeführt wird. Auf diese Weise kann mit geringem Aufwand die im Wesentlichen vollständige Umsetzung des Oxidationsmittels gewährleistet werden, ohne dass eine kontinuierliche Überwachung und Steuerung der Reduktionsstrecke erforderlich ist.

Gegenstand der Erfindung ist ferner eine Abwasserbehandlungsvorrichtung zur Behandlung von Abwasser aus der Dekontamination einer Metalloberfläche in einem Primärkühlmittelkreislauf eines Kernreaktors, wobei die Vorrichtung folgendes umfasst:
- eine Ableiteinrichtung, die für das Ableiten einer vorbestimmten Menge des ein Oxidationsmittel enthaltenden Primärkühlmittels aus dem Primärkühlmittelkreislauf vorgesehen ist,
- eine Reduktionsstrecke, die mit der Ableiteinrichtung verbunden ist und eine Dosierstelle zum Einbringen eines Reduktionsmittels in die vorbestimmte Menge des abgeleiteten Primärkühlmittels umfasst, und die für die Umsetzung des Reduktionsmittels mit dem Oxidationsmittel im Primärkühlmittel unter Bildung einer Reaktionslösung vorgesehen ist, und
- wenigstens einen mit der Reduktionsstrecke verbundenen Ionenaustauscher zur Entsalzung der Reaktionslösung.

Die Abwasserbehandlungsvorrichtung ermöglicht es, die bei der Dekontamination der Metalloberflächen in einem Primärkühlmittelkreislauf eines Kernreaktors verwendete Oxidationslösung ohne den Einsatz eines Verdampfers aufzubereiten und zu entsalzen, wodurch der Energiebedarf sowie der anfallende radioaktive Abfall deutlich verringert ist.

In einer vorteilhaften Ausführungsform umfasst die Reduktionsstrecke einen wahlweise kontinuierlich betriebenen Reaktionsbehälter. Durch die Bereitstellung eines zusätzlichen Reaktionsbehälters kann die Umsetzung des Oxidationsmittels mit dem Reduktionsmittel leichter überwacht und gesteuert werden. Außerdem kann die Abwasserbehandlungsvorrichtung flexibler gestaltet und an die Anforderungen des jeweiligen Kernreaktors angepasst werden. Ein kontinuierlich betriebener Reaktionsbehälter hat zusätzlich den Vorteil, dass die Oxidationslösung konstant aufbereitet und damit konstant aus dem Primärkühlmittelkreislauf abgeleitet und nach der Aufbereitung im Ionenaustauscher als Deionat gespeichert oder als Sperrwasser zurückgeleitet werden kann.

Der Reaktionsbehälter ist ein wahlweise kontinuierlich betriebener Rührkesselreaktor, der den Vorteil aufweist, dass die in die Oxidationslösung eingebrachte Menge an Reduktionsmittel sowie die Verweilzeit der Reaktionslösung im Rührkesselreaktor gesteuert werden kann, um eine im Wesentlichen vollständige Umsetzung des Oxidationsmittels mit dem Reduktionsmittel zu gewährleisten.

Gemäß einer vorteilhaften Ausführungsform umfasst die Reduktionsstrecke ferner einen Pufferbehälter, der mit dem Rührkesselreaktor verbunden ist. Der Pufferbehälter ermöglicht es, dass die Oxidationslösung auch dann kontinuierlich aus dem Kühlsystem abgeleitet werden kann, wenn der Rührkesselreaktor intermittierend betrieben wird. Alternativ kann der Pufferbehälter auch ein weiterer Rührkesselreaktor sein, der parallel zu dem ersten Rührkesselreaktor geschaltet ist. Die Volumina der Rührkesselreaktoren und/oder des Pufferbehälters sind so aufeinander abgestimmt, dass das aus dem Kühlmittelsystem abgeleitete Volumen der Oxidationslösung vollständig in einem der Behälter aufgenommen werden kann, während im anderen Behälter die Umsetzung des Oxidationsmittels mit dem Reduktionsmittel durchgeführt wird.

Gemäß einer weiteren vorteilhaften Ausführungsform umfasst der Reaktionsbehälter einen Strömungsrohrreaktor, der einen kontinuierlichen Betrieb erlaubt. In diesem Fall kann ein Abschnitt der Reduktionsstrecke als Strömungsrohrreaktor ausgelegt sein.

Die Länge des Strömungsrohrreaktors kann in Abhängigkeit vom Durchmesser des Strömungsrohrreaktors und der Durchflussgeschwindigkeit der Reaktionslösung festgelegt werden. Die Länge des Strömungsrohrreaktors ist bevorzugt so bemessen, dass eine Verweilzeit der Reaktionslösung im Strömungsrohrreaktor erreicht wird, in der eine im Wesentlichen vollständige Umsetzung des Oxidationsmittels mit dem Reduktionsmittel unter Bildung der von Oxidationsmittel befreiten Reaktionslösung erfolgt. Auf diese Weise kann auf zusätzliche Überwachungs- und Steuerungseinrichtungen verzichtet werden, wodurch die Prozesssicherheit erhöht und die Kosten gesenkt werden.

Gegenstand der Erfindung ist ferner die Verwendung der erfindungsgemäßen Abwasserbehandlungsvorrichtung zur Durchführung des erfindungsgemäßen Abwasserbehandlungsverfahrens, und bevorzugt die Verwendung der Abwasserbehandlungsvorrichtung bei einem Dekontaminationsverfahren, in dem eine Metalloberfläche in einem Primärkühlmittelkreislauf eines Kernreaktors dekontaminiert wird, die eine Schicht mit einem oder mehreren Metalloxiden sowie Radioisotopen aufweist.

Das Dekontaminationsverfahren kann einen oder mehrere Behandlungszyklen umfassen, mit jeweils einem Oxidationsschritt, bei dem ein Oxidationsmittel unter Bildung einer Oxidationslösung in ein Primärkühlmittel im Primärkühlmittelkreislauf eingebracht und die Oxidationslösung im Primärkühlmittelkreislauf zirkuliert wird, um die Oxidationslösung in Kontakt mit der Metalloberfläche zu bringen; einem Reduktionsschritt, bei dem ein Reduktionsmittel in die Oxidationslösung eingebracht und das Oxidationsmittel in der Oxidationslösung reduziert wird; und einem Dekontaminationsschritt, wobei die im Oxidationsschritt behandelte Metalloberfläche mit einem Dekontaminationsmittel in Kontakt gebracht wird, um unter Bildung einer Dekontaminationslösung zumindest einen Teil der Metalloxide und Radioisotope im Primärkühlmittel zu lösen. Erfindungsgemäß wird eine vorbestimmte Menge der im Oxidationsschritt gebildeten Oxidationslösung in die Abwasserbehandlungsvorrichtung abgeleitet.

Besonders bevorzugt eignen sich das erfindungsgemäße Verfahren und die erfindungsgemäße Abwasserbehandlungsvorrichtung zur Verwendung bei der vollständigen Anlagendekontamination eines Druckwasserreaktors, eines Siedewasserreaktors oder eines Schwerwasserreaktors. Da die chemische Beschaffenheit und Zusammensetzung sowie die Dicke der Oxidschicht im gesamten Dekontaminationsbereich bei einer FSD unterschiedlich sein kann und die zu behandelnde Gesamtoberfläche des Dekontaminationsbereiches bei einer FSD sehr groß ist, sind besonders lange Oxidationszeiten notwendig, um die auf den Metalloberflächen abgelagerten Oxidschichten aufzuschließen. Das erfindungsgemäße Verfahren trägt besonders dazu bei, die Menge des anfallenden, radioaktiv belasteten Abwassers zu vermindern. Bei Schwerwasserreaktoren ist mit Hilfe des erfindungsgemäßen Verfahrens eine Rückgewinnung des teuren Schwerwassers ohne hohe Verdampfungsverluste und weitere Aufbereitungsschritte möglich.

Weitere Vorteile und Merkmale ergeben sich aus der nachfolgenden Beschreibung in Verbindung mit der beigefügten Zeichnung. In der Zeichnung zeigen:
- Figur 1 eine schematische Ansicht einer erfindungsgemäßen Abwasserbehandlungsvorrichtung mit einem Strömungsrohrreaktor; und
- Figur 2 eine weitere Ausführungsform einer erfindungsgemäßen Abwasserbehandlungsvorrichtung mit einem Rührkesselreaktor.

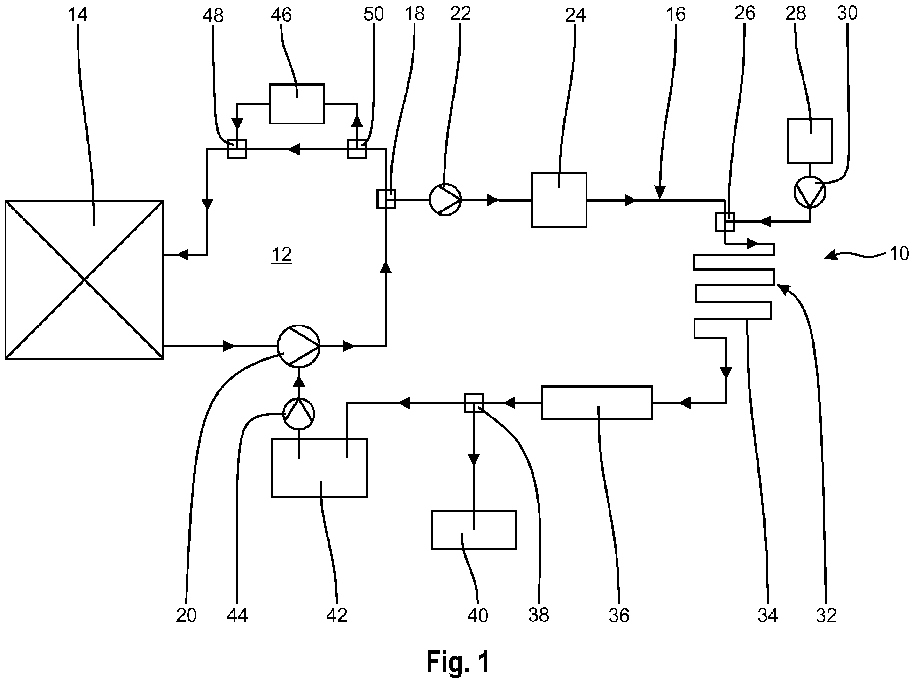

Die in Figur 1 schematisch dargestellte Abwasserbehandlungsvorrichtung 10 ist an einen Primärkühlmittelkreislauf 12 eines Kernreaktors 14 angeschlossen und dient zur Aufbereitung von Abwasser aus der Dekontamination einer Metalloberfläche in dem Primärkühlmittelkreislauf 12, die eine Schicht mit einem oder mehreren Metalloxiden sowie Radioisotopen aufweist. Der Primärkühlmittelkreislauf 12 umfasst alle Systeme und Komponenten, die im Leistungsbetrieb des Kernreaktors 14 mit dem Primärkühlmittel in Kontakt stehen. Dazu gehören insbesondere, jedoch nicht ausschließlich, die Kühlmittelrohrleitungen, der Reaktorbehälter, die Dampferzeuger und Hilfssysteme wie das Not- und Nachkühlsystem, das Volumenregelsystem und das Reaktorwasser-Reinigungssystem (nicht gezeigt).

Der Primärkühlmittelkreislauf 12 umfasst ferner die Hauptkühlmittelpumpe 20, die zur Zirkulation des Primärkühlmittels und/oder der Oxidationslösung im Oxidationsschritt vorgesehen ist. Anstelle einer Hauptkühlmittelpumpe 20 können auch mehrere Hauptkühlmittelpumpen betrieben werden. Zusätzlich oder alternativ zur Hauptkühlmittelpumpe 20 können auch die Pumpen der Hilfssysteme, insbesondere die Pumpen des Not- und Nachkühlsystems (nicht gezeigt), für die Zirkulation der Oxidationslösung im Primärkühlmittelkreislauf 12 eingesetzt werden. Die von den Kühlmittelpumpen erzeugte Abwärme kann dazu genutzt werden, die Oxidationslösung auf die gewünschte Reaktionstemperatur zu bringen. Wenigstens eine der Kühlmittelpumpen weist eine Sperrwasserversorgung auf.

Obwohl in Figur 1 nur eine Schleife des Primärmittelkühlmittelkreislaufs 12 gezeigt ist, kann davon ausgegangen werden, dass die erfindungsgemäße Abwasserbehandlungsvorrichtung 10 auch bei Kernreaktoren angewendet werden kann, die einen Primärkühlmittelkreislauf 12 mit zwei oder mehr Schleifen aufweisen.

Der Kernreaktor 14 kann insbesondere als ein Druckwasserreaktor, ein Siedewasserreaktor oder ein Schwerwasserreaktor gebaut sein.

Die an den Primärkühlmittelkreislauf 12 angeschlossene Abwasserbehandlungsvorrichtung 10 umfasst eine Reduktionsstrecke 16 und eine Ableiteinrichtung 18, an der ein Teil der Oxidationslösung aus dem Primärkühlmittelkreislauf 12 als Abwasser in die Reduktionsstrecke 16 abgeleitet wird. Die Ableiteinrichtung 18 kann beispielsweise ein Dreiwegeventil und/oder einen direkt in einen Dekontaminationsbereich des Primärkühlmittelkreislaufs 12 integrierten Anschlussstutzen, mit oder ohne Regelarmatur, umfassen. Dieses hat den Vorteil, dass sowohl der Volumenstrom im Primärkühlmittelkreislauf 12 als auch der Volumenstrom der in die Reduktionsstrecke 16 abgeleiteten Oxidationslösung geregelt werden kann.

In der Reduktionsstrecke 16 ist eine Pumpe 22 vorgesehen, mit deren Hilfe der an der Ableiteinrichtung 18 aus dem Primärkühlmittelkreislauf abgeleitete Teil der Oxidationslösung durch die Reduktionsstrecke 16 gepumpt wird.

Im Anschluss an die Pumpe 22 ist ein Durchflussmessgerät 24 angeordnet, mit dem der Volumenstrom der Oxidationslösung in der Reduktionsstrecke 16 bestimmt und gesteuert werden kann.

Stromabwärts der Pumpe 22 ist eine Dosierstelle 26 vorgesehen, an der ein Reduktionsmittel aus einer Dosiereinrichtung 28 mittels einer Dosierpumpe 30 in die Reduktionsstrecke 16 eingebracht werden kann.

In Strömungsrichtung nach der Dosierstelle 26 ist ein Reaktionsabschnitt 32 vorgesehen, in dem die Umsetzung des Reduktionsmittels mit dem Oxidationsmittel in der Oxidationslösung unter Bildung einer Reaktionslösung erfolgt.

Der Reaktionsabschnitt 32 weist bei der in Fig. 1 gezeigten Ausführungsform einen Strömungsrohrreaktor 34 mit einer Länge auf, die so bemessen ist, dass eine für die im Wesentlichen vollständige Umsetzung des Oxidationsmittels mit dem Reduktionsmittel ausreichende Verweilzeit der Reaktionslösung im Strömungsrohrreaktor 34 erreicht wird, so dass die Reaktionslösung am Ausgang des Strömungsrohrreaktors von dem Oxidationsmittel befreit ist. Die Länge des Strömungsrohrreaktors 34 wird in Abhängigkeit vom Reaktordurchmesser und der Durchflussgeschwindigkeit der Reaktionslösung festgelegt.

Mit dem Reaktionsabschnitt 32 der Reduktionsstrecke 16 ist wenigstens ein Ionenaustauscher 36 verbunden, in dem wenigstens die in der vom Oxidationsmittel befreiten Reaktionslösung enthaltenen radioaktiven Komponenten, bevorzugt die darin enthaltenen Metallionen gebunden werden und die Reaktionslösung somit entsalzt und gereinigt wird. Besonders bevorzugt wird das durch Entsalzen aufbereitete Abwasser in Deionatqualität bereitgestellt.

Die aus dem Ionenaustauscher 36 austretende und durch Entsalzen wenigstens von radioaktiven Komponenten befreite Lösung kann an einer Anschlussstelle 38 wahlweise abgeleitet und direkt dem Abwasser 40 zugeführt werden, und/oder beispielsweise als Deionat an einen Zwischenspeicherbehälter 42 für die Sperrwasserpumpe 44 oder einen anderen Speicherbehälter für Deionat (nicht dargestellt) weitergeleitet werden. Das in dem anderen Speicherbehälter aufgefangene Deionat kann beispielsweise zum Ausgleich von Verlusten von Primärkühlmittel genutzt werden. Diese Ausführungsform eignet sich insbesondere zur Dekontamination von Schwerwasserreaktoren, bei denen die Verluste an Schwerwasser schon aus wirtschaftlichen Gründen möglichst gering gehalten werden sollen.

Aus dem Zwischenbehälter 42 kann die entsalzte Lösung mittels einer Sperrwasserpumpe 44 der Hauptkühlmittelpumpe 20 als externes Sperrwasser zugeführt werden und steht auf diese Weise dem Primärkühlmittelkreislauf 12 wieder als Primärkühlmittel oder Lösungsmittel für weitere Behandlungschemikalien zur Verfügung.

An den Primärkühlmittelkreislauf 12 kann eine weitere externe Dekontaminationsanlage 46 über Anschlussstellen 48, 50 angeschlossen sein, mit der die einzelnen Schritte des Dekontaminationsverfahrens überwacht und gesteuert werden können. Die externe Dekontaminationsanlage 46 kann modular aufgebaut sein und insbesondere einen oder mehrere Vorratsbehälter für Behandlungschemikalien wie Oxidationsmittel und Dekontaminationsmittel zur Durchführung der Dekontamination, Dosiereinrichtungen zur Einspeisung der Behandlungschemikalien in den Primärkühlmittelkreislauf 12, Pumpen, Heizungen, Filtereinrichtungen, Probenahmesysteme, einen oder mehrere Ionenaustauscher und einen UV-Reaktor zur photokatalytischen Zersetzung des Dekontaminationsmittels sowie Schnittstellen zur Fernüberwachung und verschiedene Sensoren zur Bestimmung stoffspezifischer Konzentrationen, des pH-Wert, der Aktivität der Behandlungslösung und anderer Verfahrensparameter enthalten. Über die Anschlussstellen 48, 50 kann die externe Dekontaminationsanlage 46 wahlweise zugeschaltet oder vom Primärkühlmittelkreislauf 12 abgekoppelt werden. Die Auslegung und Bestückung der externen Dekontaminationsanlage 46 richtet sich danach, ob und in welchem Umfang während der Dekontamination auf kraftwerkseigene Einrichtungen zurückgegriffen werden kann.

In einer bevorzugten Ausführungsform kann auch die erfindungsgemäße Abwasserbehandlungsvorrichtung 10 in die externe Dekontaminationsanlage 46 integriert sein. Bevorzugt kann dann eine der Anschlussstellen 48, 50 zusätzlich als Ableiteinrichtung 18 dienen.

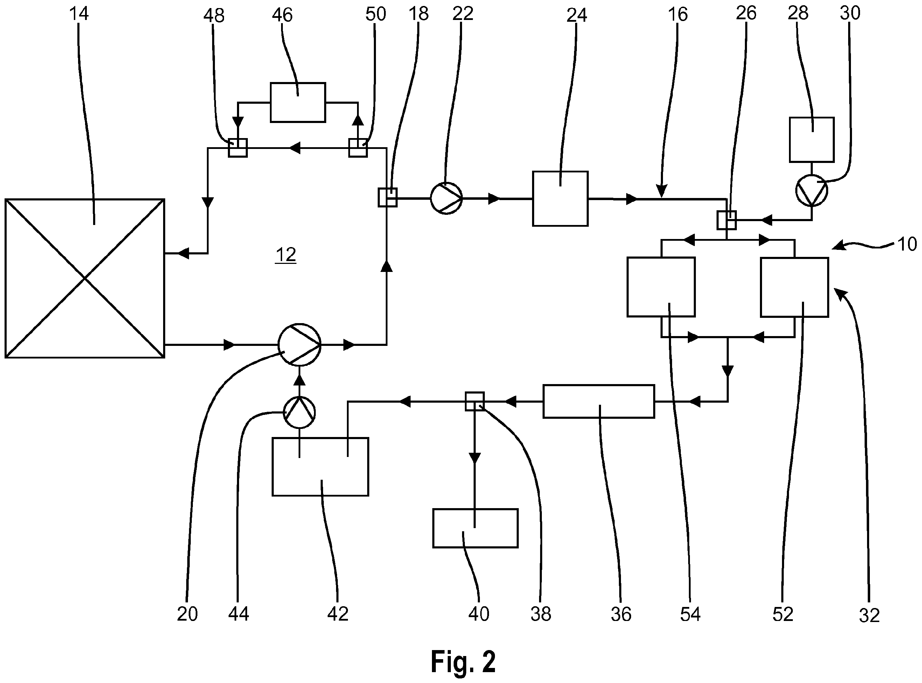

In der in Figur 2 gezeigten Ausführungsform sind gleiche Bezugszeichen für Bauteile mit gleicher Funktion wie in Figur 1 verwendet. Insofern wird Bezug auf die obige Beschreibung genommen.

Der Reaktionsabschnitt 32 weist bei der Ausführungsform der Fig. 2 einen ersten Rührkesselreaktor 52 auf, in dem die Umsetzung des Oxidationsmittels mit dem Reduktionsmittel erfolgt. Zusätzlich zum ersten Rührkesselreaktor 52 ist ein zweiter Rührkesselreaktor 54 vorgesehen, der parallel zum ersten Rührkesselreaktor 52 geschaltet ist. Diese Anordnung ermöglicht einen intermittierenden Betrieb der Rührkesselreaktoren 52, 54, wobei in einem der Reaktoren die Umsetzung des Oxidationsmittels mit dem Reduktionsmittel erfolgt, während der andere Rührkesselreaktor mit der aus dem Primärkühlmittelkreislauf 12 abgeleiteten Oxidationslösung gefüllt wird. Die Volumina der Rührkesselreaktoren 52, 54 sind so abgestimmt, dass die für eine im Wesentlichen vollständige Umsetzung des Oxidationsmittels mit dem Reduktionsmittel erforderliche Verweilzeit der Reaktionslösung in dem einen Reaktor kürzer ist als die Zeit, die für eine Füllung des anderen Reaktors mit der Reaktionslösung benötigt wird.

Alternativ kann der zweite Rührkesselreaktor 54 als einfacher Pufferbehälter gebildet sein, der mit dem ersten Rührkesselreaktor 52 verbunden ist und die aus dem Primärkühlmittelkreislauf 12 abgeleitete Oxidationslösung aufnimmt, bis die Umsetzung des Oxidationsmittels mit dem Reaktionsmittel im Rührkesselreaktor 52 abgeschlossen ist. Bei dieser Ausführungsform kann das Reduktionsmittel direkt in den Rührkesselreaktor 52 dosiert werden.

Ferner kann der Rührkesselreaktor 52 kontinuierlich betrieben werden. In diesem Fall kann der Pufferbehälter oder der zweite Rührkesselreaktor 54 entfallen. Der Rührkesselreaktor 52 ist dann so ausgelegt, dass der Volumenstrom der Reaktionslösung durch den Rührkesselreaktor 52 eine Verweilzeit ergibt, die zur im Wesentlichen vollständigen Umsetzung des Oxidationsmittels mit dem Reduktionsmittel ausreicht und eine von dem Oxidationsmittel befreite Reaktionslösung ergibt.

Im Folgenden ist zunächst ein Dekontaminationsverfahren beschrieben, bei dem die erfindungsgemäße Abwasserbehandlungsvorrichtung 10 verwendet werden kann.

Die Dekontamination einer Metalloberfläche im Primärkühlmittelkreislauf 12 eines Kernreaktors 14, die eine Schicht mit einem oder mehreren Metalloxiden sowie Radioisotopen aufweist, kann in einem oder mehreren Behandlungszyklen mit jeweils einem Oxidationsschritt, einem Reduktionsschritt und einem Dekontaminationsschritt sowie wahlweise weiteren Behandlungsschritten erfolgen.

Zur Durchführung des Oxidationsschritts wird ein Oxidationsmittel unter Bildung einer Oxidationslösung in das Primärkühlmittel im Primärkühlmittelkreislauf 12 eingebracht, und die Oxidationslösung wird im Primärkühlmittelkreislauf 12 zirkuliert, um die Oxidationslösung in Kontakt mit der Metalloberfläche zu bringen. Das Einspeisen des Oxidationsmittels in das Primärkühlmittel kann unter Verwendung der externen Dekontaminationsanlage 46 oder des kraftwerkseigenen Volumenkontrollsystems erfolgen.

Für die Umwälzung der Oxidationslösung können wenigstens die Hauptkühlmittelpumpe 20 und/oder weitere im Primärkühlmittelkreislauf 12 vorhandene Kühlmittelumpen verwendet werden, die gleichzeitig als Wärmequelle dienen. Die Dichtigkeit der Hauptkühlmittelpumpe 20 und/oder der weiteren Kühlmittelpumpen wird im Oxidationsschritt durch Zufuhr von externem Sperrwasser über die Sperrwasserpumpe 44 sichergestellt. Als Sperrwasser im Oxidationsschritt dient Deionat, das aus der Hauptkühlmittelpumpe 20 und/oder den weiteren Kühlmittelpumpen in das Primärkühlmittel abgegeben wird und somit das Volumen des Primärkühlmittels während des Oxidationsschritts erhöht.

Im Dekontaminationsschritt und wahlweise anderen Behandlungsschritten kann die Behandlungslösung selbst als Sperrwasser dienen, oder die Zirkulation der Behandlungslösung kann mit externen Pumpen, beispielsweise der externen Dekontaminationsanlage 46, erfolgen.

Die Konzentration des Oxidationsmittels in der Oxidationslösung liegt vorzugsweise in einem Bereich zwischen 10 und 800 mg/l, bevorzugt in einem Bereich von 100 bis 300 mg/l.

Die auf der Metalloberfläche abgelagerten Oxidschichten enthalten üblicherweise Cr(III), Fe(ll) und Fe(III) sowie Ni(ll) in einer schwerlöslichen Spinellstruktur. Durch den Kontakt mit dem Oxidationsmittel werden Cr(III) und Fe(II) in der Oxidschicht auf der Metalloberfläche zu Cr(VI) und Fe(III) oxidiert und dadurch die Spinellstruktur der Schicht aufgebrochen. Als Oxidationsmittel eingesetztes Permanganat (MnO₄⁻) wird dabei zu Braunstein (MnO₂) reduziert. Während Cr(VI) in dieser Phase als leicht lösliches Chromat in Lösung geht, bleiben Fe(III) und Ni(ll) größtenteils als Oxidhydrat auf der Metalloberfläche zurück.

Der Oxidationsschritt ist ein diffusionskontrollierter Prozess, der durch den Transport von frischem Oxidationsmittel zur Metalloberfläche limitiert ist und dadurch nur eine bestimmte Oxidschichtdicke aufschließen kann. Bei Verwendung von Permanganat wird die Diffusion des Oxidationsmittels zur Metalloberfläche zusätzlich durch die Bildung von Braunstein auf der Oberfläche mit fortlaufender Oxidationszeit langsamer. Dies hat eine kontinuierliche Abnahme der Cr(VI)-Bildung mit der Behandlungszeit zur Folge. Der Oxidationsschritt dauert üblicherweise mehrere Stunden und ist abgeschlossen, wenn kein Anstieg der Cr(VI)-Konzentration in der Oxidationslösung mehr festgestellt werden kann.

An den Oxidationsschritt schließt sich im Dekontaminationsverfahren ein Reduktionsschritt an, in dem der in der Oxidationslösung enthaltende Rest an Oxidationsmittel und wahlweise der bei Verwendung von Permanganat gebildete Braunstein im Primärkühlmittelkreislauf 12 reduziert wird. Als Reduktionsmittel wird eine aliphatische Dicarbonsäure, bevorzugt Oxalsäure, eingesetzt.

Bei Verwendung von Oxalsäure als Reduktionsmittel lauten die allgemeinen Reaktionsgleichungen wie folgt:

2 MnO₄⁻ + 5 H₂C₂O₄ + 6 H⁺ → 2 Mn²⁺ + 10 CO₂ + 8 H₂O

MnO₂ + H₂C₂O₄ + 2 H⁺ → Mn²⁺ + 2 CO₂ + 2 H₂O

Die Reduktion mit Oxalsäure liefert ausschließlich CO₂ und H₂O, wobei pro Mol Permanganat fünf Mol CO₂ und pro Mol Braunstein zwei Mol CO₂ entstehen. Das im Reduktionsschritt entstehende CO₂ kann beispielsweise in einem Ausgleichsbehälter der externen Dekontaminationsanlage oder in einem Niederdruckbereich des Primärkühlmittelkreislaufs 12 gesammelt und von dort über einen entsprechenden Filter der betrieblichen Abluft des Kernreaktors zugeführt werden.

Der Reduktionsschritt ist beendet, sobald die Konzentration des Oxidationsmittels nicht mehr weiter abnimmt und/oder unter einen vorbestimmten Grenzwert gefallen ist.

In dem an den Reduktionsschritt anschließenden Dekontaminationsschritt wird die im Oxidationsschritt behandelte Metalloberfläche mit einem Dekontaminationsmittel in Kontakt gebracht, um unter Bildung einer Dekontaminationslösung zumindest einen Teil der Metalloxide und Radioisotope im Primärkühlmittel zu lösen.

Als Dekontaminationsmittel kann wiederum Oxalsäure eingesetzt werden. Der Übergang zwischen Reduktionsschritt und Dekontaminationsschritt im Primärkühlmittelkreislauf 12 ist daher fließend.

Bei Verwendung von Oxalsäure als Dekontaminationsmittel wird Cr(VI) zu Cr(III) reduziert und verbleibt als Oxalato-Komplex in der Dekontaminationslösung. Etwa vorhandenes Ni(III) wird zu Ni(ll) reduziert und geht als Ni(II)-Oxalato-Komplex in Lösung, während Eisen als Fe(III)-Oxalato-Komplex in Lösung geht. Darüber hinaus enthält die Dekontaminationslösung auch die aus der Oxidschicht gelösten Radioisotope.

Die metallionenhaltige Dekontaminationslösung wird über ein Kationenaustauscherharz geleitet, um die Korrosionsprodukte Fe und Ni sowie das aus dem Oxidationsschritt stammende Mn und die Radioisotope zu binden. Geringe Mengen der Radioisotope und der Cr(III)-Oxalatokomplex können auf einem Anionenaustauscherharz zurückgehalten werden. Durch die permanente Reinigung der Dekontaminationslösung auf lonenaustauscherharzen wird eine Rückeinspeisung von Radioaktivität in das Kühlmittelsystem verhindert und eine effektive Reduzierung der Dosisbelastung im aktuellen Behandlungszyklus erreicht. Der Dekontaminationsschritt innerhalb eines Behandlungszyklus ist beendet, sobald keine Abnahme der Aktivität der Dekontaminationslösung mehr festgestellt werden kann.

Im anschließenden Reinigungsschritt wird das Dekontaminationsmittel aus der von den Metallionen gereinigten Dekontaminationslösung entfernt. Bei Verwendung von Oxalsäure als Dekontaminationsmittel kann eine Zersetzung der Oxalsäure durch photokatalytische Nassoxidation mittels UV-Licht zu CO₂ und Wasser erfolgen. Parallel dazu wird die Dekontaminationslösung weiter kontinuierlich über Ionenaustauscher zur Entfernung von Restaktivität und Korrosionsprodukten geleitet. Die Entfernung der reduzierenden Bestandteile aus der Dekontaminationslösung dient zur Vorbereitung des nächsten Behandlungszyklus und stellt die Stabilität des im folgenden Oxidationsschritt eingesetzten Oxidationsmittels sicher.

Am Ende des letzten Behandlungszyklus, sobald die gewünschte Reduzierung der Dosisleistung der Metalloberfläche erreicht ist, wird die gereinigte und von restlichem Dekontaminationsmittel befreite Dekontaminationslösung über Mischbettfilter bis zum Erreichen einer festgesetzten Grenzleitfähigkeit gereinigt.

Im Folgenden ist das erfindungsgemäße Verfahren zur Behandlung von Abwasser aus der Dekontamination einer Metalloberfläche im Primärkühlmittelkreislauf eines Kernreaktors unter Verwendung der Abwasserbehandlungsvorrichtung 10 im Einzelnen beschrieben.

Erfindungsgemäß wird eine vorbestimmte Menge der im Oxidationsschritt des oben beschriebenen Dekontaminationsverfahrens gebildeten Oxidationslösung aus dem Primärkühlmittelkreislauf 12 abgeleitet und in der an den Primärkühlmittelkreislauf angeschlossenen Reduktionsstrecke 16 der erfindungsgemäßen Abwasserbehandlungsvorrichtung 10 mit einem Reduktionsmittel umgesetzt. Mit der Umsetzung der Oxidationslösung in der Abwasserbehandlungsvorrichtung 10 kann begonnen werden, noch während der Oxidationsschritt im Primärkühlmittelkreislauf 12 erfolgt.

Die vorbestimmte Menge der Oxidationslösung, die aus dem Primärkühlmittelkreislauf 12 abgeleitet wird, entspricht der Sperrwassermenge, die während des Oxidationsschritts den Kühlmittelpumpen, insbesondere der Hauptkühlmittelpumpe 20, zugeführt und in das Primärkühlmittel abgegeben wird. Insbesondere kann der Volumenstrom der Oxidationslösung in die Reduktionsstrecke 16 einem Volumenstrom des während des Oxidationsschritts in das Primärkühlmittel eingetragenen Sperrwassers entsprechen. Mithilfe der Pumpe 22 und des Durchflussmessgeräts 24 kann die Durchflussgeschwindigkeit der Oxidationslösung in der Reduktionsstrecke 16 gesteuert werden.

Das Reduktionsmittel wird von der Dosiereinrichtung 28 an der Dosierstelle 26 in die Oxidationslösung in der Reduktionsstrecke 16 eingebracht und reduziert das Oxidationsmittel im an die Dosierstelle 26 anschließenden Reaktionsabschnitt 32 unter Bildung einer Reaktionslösung, die vom Oxidationsmittel befreit ist.

Die in der Reduktionsstrecke 16 und im Reduktionsschritt des oben beschriebenen Dekontaminationsverfahrens eingesetzten Reduktionsmittel können gleich oder verschieden sein. Bevorzugt werden in beiden Schritten gleiche Reduktionsmittel verwendet. Als Reduktionsmittel in der Reduktionsstrecke 16 dient bevorzugt eine aliphatische Dicarbonsäure, vorzugsweise Oxalsäure.

Durch das Reduktionsmittel werden die in der Oxidationslösung in der Reduktionsstrecke 16 enthaltene Restmenge an Oxidationsmittel wie Permanganat (MnO₄⁻) und wahlweise in die Reduktionsstrecke 16 eingetragener Braunstein (MnO₂) zu Mn²⁺ reduziert.

Durch die Verwendung von leicht überstöchiometrischen Mengen von Oxalsäure ist es möglich, das Permanganat und wahlweise den Braunstein im Reaktionsabschnitt 32 vollständig zu Mn(ll) zu reduzieren und zu komplexieren, damit dieses in Lösung bleibt. Aus der Oxidschicht gelöstes Cr(VI) wird durch das Reduktionsmittel zu Cr(III) reduziert und bleibt als Oxalatokomplex in der Reaktionslösung. Die Oxalsäure wird durch die Umsetzung mit dem Oxidationsmittel zu Kohlendioxid CO₂ und Wasser umgesetzt.

Das Ausgasen von CO₂ aus der Reaktionslösung kann dadurch verhindert werden, dass die Reduktionsstrecke 16 und/oder der Reaktionsabschnitt 32 mit Druck beaufschlagt wird. Damit wird eine vollständige Lösung des CO₂ in der Reaktionslösung erreicht.

Bei Verwendung eines Strömungsrohrreaktors 34 (Fig. 1) im Reaktionsabschnitt 32 wird bevorzugt ein ausreichender Überdruck bis nach dem Ionenaustauscher 36 eingestellt.

Wird ein Reaktionsbehälter, wie beispielsweise ein Rührkesselreaktor 52 verwendet (Fig. 2), kann die Entgasung im Reaktionsbehälter erfolgen und die Hauptmenge des CO₂ über einen entsprechenden HEPA-Filter der betrieblichen Abluft des Kernkraftwerks zugeführt werden.

Das Volumen der Reduktionsstrecke 16 ist vorzugsweise an die Reaktionszeit der Umsetzung des Oxidationsmittels mit dem Reduktionsmittel angepasst, sodass die Verweilzeit der Reaktionslösung im Reaktionsabschnitt 32 ausreicht, um eine im Wesentlichen vollständige Umsetzung des Oxidationsmittels mit dem Reduktionsmittel in der Reduktionsstrecke 16 zu gewährleisten. Die Reaktionszeit der Umsetzung des Oxidationsmittels mit dem Reduktionsmittel kann experimentell ermittelt werden. Das Volumen der Reduktionstrecke 16 und die Verweilzeit der Reaktionslösung im Reaktionsabschnitt 32 werden in Abhängigkeit von der Menge und/oder dem Volumenstrom des während des Oxidationsschritts in das Primärkühlmittel eingetragenen externen Sperrwassers festgelegt, so dass eine im Wesentlichen konstante Kühlmittelmenge im Primärkühlmittelkreislauf erhalten werden kann..

Bei Verwendung eines Strömungsrohrreaktors 34 kann die Verweilzeit des Oxidationsmittels und des Reduktionsmittels im Strömungsrohrreaktor 34 über die Länge des Strömungsrohrreaktors 34 und/oder die Durchflussgeschwindigkeit der Reaktionslösung gesteuert werden, um eine im Wesentlichen vollständige Umsetzung des Oxidationsmittels mit dem Reduktionsmittel im Strömungsrohrreaktor 34 zu gewährleisten. Am Ausgang des Strömungsrohrreaktors 34 liegt dann eine von Oxidationsmittel befreite Reaktionslösung vor.

Falls ein Rührkesselreaktor 52 verwendet wird, kann das Volumen des Rührkesselreaktors so ausgelegt werden, dass die Verweilzeit der Reaktionslösung im Reaktor für eine im Wesentlichen vollständige Umsetzung des Oxidationsmittels mit dem Reduktionsmittel ausreicht. Der Rührkesselreaktor 52 wird vorzugsweise kontinuierlich betrieben. Im Falle eines intermittierenden Betriebs kann zusätzlich ein Pufferbehälter oder ein weiterer Rührkesselreaktor 54 vorgesehen werden, deren Volumina so aufeinander abgestimmt sind, dass im Reaktor 52 die vollständige Umsetzung des Oxidationsmittels erreicht wird, während der andere Reaktor 54 oder Pufferbehälter mit der aus dem Primärkühlmittelkreislauf 12 in die Reduktionsstrecke 16 abgeleiteten Oxidationslösung gefüllt wird.

Die von dem Oxidationsmittel befreite Reaktionslösung wird zur Reinigung über ein lonenaustauscherharz im Ionenaustauscher 36 geleitet, um eine entsalzte Lösung zu bilden. Das Mn aus dem Oxidationsschritt sowie wahlweise in der Reaktionslösung gelöste Korrosionsprodukte Fe und Ni sowie radioaktives Material werden auf Kationenonenaustauscherharz gebunden. Geringe Mengen an radioaktiven Material und das Cr(III) können auf Anionenaustauscherharz gebunden werden. Die Entsalzung kann vollständig unter Bildung von Deionat oder teilweise erfolgen, bevorzugt mindestens bis zum Erreichen einer vorbestimmten Aktivität der aufbereiteten Lösung, die eine Entsorgung der Lösung ins Abwasser erlaubt.

Die vom Oxidationsmedium befreite Reaktionslösung kann wahlweise vorlaufend zum Eintritt in den Ionenaustauscher 36 oder nachfolgend über einen Filter von möglichen Partikeln gereinigt werden.

Die so gereinigte, entsalzte Lösung kann zur Sperrwasserversorgung geleitet werden, wo sie als Sperrwasser für die Hauptkühlmittelpumpe 20 oder weitere Kühlmittelpumpen zur Verfügung steht und in den Primärkühlmittelkreislauf 12 zurückgeführt werden kann. Zusätzlich oder alternativ kann die gereinigte entsalzte Lösung ganz oder teilweise entsorgt werden.

### Ausführungsbeispiel

Zur Durchführung einer Abwasserbehandlung im Labormaßstab wurde davon ausgegangen, dass die maximale Konzentration von Permangansäure in der Oxidationslösung etwa 300 ppm (mg/kg) beträgt. Diese Konzentration liegt an der Obergrenze der in Dekontaminationsverfahren mit Permanganat üblicherweise eingesetzten Menge an Oxidationsmittel und stellt daher eine konservative Annahme dar.

Die zu behandelnde Menge der Oxidationslösung entspricht der im Oxidationsschritt benötigten Sperrwassermenge und ist abhängig von der Anzahl der Kühlmittelpumpen, die während der Oxidationsphase in Betrieb sind. Der Sperrwassereintrag beim simultanen Betrieb aller vier Hauptkühlmittelpumpen im Primärkühlmittelkreislauf beträgt maximal 6 m³/h.

Die Einspeisung der Oxalsäure in die Reduktionsstrecke erfolgt bevorzugt in Form einer Lösung. Die Konzentration einer für Dekontaminationsverfahren verwendeten Vorratslösung von Oxalsäure beträgt etwa 100 g Oxalsäuredihydrat pro 1 kg Wasser, entsprechend 100 kg Oxalsäuredihydrat pro Kubikmeter Wasser. Bei dieser Konzentration ist eine Ausfällung von Oxalsäure bei einer Temperatur T ≥ 15 °C ausgeschlossen.

Die Einspeiserate der Oxalsäurelösung in die Reduktionsstrecke ist abhängig von der Permangansäurekonzentration der Oxidationslösung und der Sperrwassermenge. Unter den oben angenommenen maximalen Bedingungen beträgt sie etwa 63,5 Liter/h. Dies entspricht der Oxalsäuremenge, die stöchiometrisch nötig ist, um Permangansäure in der Oxidationslösung zu Mn(ll) zu reduzieren und zu komplexieren. Dadurch wird die Bildung von Niederschlägen nach der Reduktion vermieden. Die Einspeiserate der Oxalsäure kann bei Abweichung von den oben angegebenen Ausgangsparametern neu ermittelt und/oder angepasst werden. Eine Feinjustierung der Einspeiserate kann außerdem während der Durchführung der Abwasserbehandlung anhand von Leitfähigkeitsmessungen vor der lonenaustauschersäule erfolgen.

Die benötigte Länge des Schlauches, der als kontinuierlicher Strömungsrohrreaktor dient, ist abhängig vom verwendeten Schlauchdurchmesser, von der benötigten Verweilzeit für den vollständigen Ablauf der Reaktion und von der Durchflussgeschwindigkeit. Als Schlauchdurchmesser wurde ein üblicher Durchmesser für Dekontaminationsschläuche, DN 80, festgelegt. Die Reaktionszeit für die Umsetzung von Permangansäure mit Oxalsäure beträgt unter den angegebenen Bedingungen und bei Temperaturen T ≥ 85°C bis 95 °C maximal 2 Minuten. Unter Berücksichtigung des maximalen Sperrwassereintrags von 6 m³/h ergibt sich daraus eine erforderliche Schlauchlänge von etwa 40 m.

Die oben berechneten Parameter wurden im Technikumsmaßstab überprüft. Anstelle eines Schlauchdurchmesser DN 80 wurde für die Technikumsversuche ein Schlauch mit einem Durchmesser von DN 25 verwendet. Die Schlauchlänge von 40 m wurde beibehalten. Um dieselbe Verweilzeit der Reaktionslösung zu erreichen, wurde die Durchflussgeschwindigkeit auf 500 Liter/h eingestellt. Die gemessene Verweilzeit der Reaktionslösung im Schlauch betrug zwei Minuten und drei Sekunden (02:03), mit einer Standardabweichung von neun Sekunden (00:09). Die an die Durchflussgeschwindigkeit angepasste Einspeiserate der Oxalsäurelösung betrug 5,25 Liter/h. Andere Prozessparameter wie die Konzentration der Permangansäure oder die Reaktionstemperatur blieben unverändert. Am Ausgang des als Strömungsrohrreaktor verwendeten Schlauches wurde eine farblose, von Permanganat befreite Lösung erhalten.

Die Durchführbarkeit der Reduktion von Permangansäure in einem als Strömungsrohrreaktor dienenden Schlauch konnte somit nachgewiesen werden. Es wurde bestätigt, dass die berechnete Verweilzeit ausreichend war, um eine vollständige Reduktion der Permangansäure zu erreichen. Die in Lösung verbleibenden Ionen ergeben einen lonenaustauscherbedarf von etwa 250 Liter pro 100 Kubikmeter Permangansäurelösung am Ende des Oxidationsschrittes.

Ein Vorteil der hier beschriebene Konditionierung der Oxidationslösung durch Reduktion mit Oxalsäure in einem Strömungsrohrreaktor liegt darin, dass das Volumen der erzeugten Abfälle und der Aufwand für die Durchführung der Reduktionsreaktion gering ist im Vergleich zur Behandlung der Abwässer von Dekontaminationsverfahren mittels Verdampfer nach dem Stand der Technik.

Die Erfindung ist somit besonders nützlich für kerntechnische Anlagen, die nicht über eine ausreichende Verdampferkapazität zur Bewältigung der während einer vollständigen Anlagendekontamination anfallenden Abwassermenge verfügen, und für Schwerwasserreaktoren, bei denen ein Austrag von hohen Schwerwassermengen während einer Anlagendekontamination im Umfang von mehreren hundert Kubikmetern nicht wirtschaftlich ist.

## Patentansprüche

1. Verfahren zur Behandlung von Abwasser aus der Dekontamination einer Metalloberfläche in einem Primärkühlmittelkreislauf (12) eines Kernreaktors (14), **dadurch gekennzeichnet, dass** das Verfahren die folgenden Schritte umfasst:
a) ein Oxidationsmittel wird unter Bildung einer Oxidationslösung in ein Primärkühlmittel im Primärkühlmittelkreislauf (12) eingebracht und die Oxidationslösung wird im Primärkühlmittelkreislauf (12) zirkuliert, um die Oxidationslösung in Kontakt mit der Metalloberfläche zu bringen;
b) eine vorbestimmte Menge der Oxidationslösung wird während oder nach Schritt a) aus dem Primärkühlmittelkreislauf (12) in eine mit dem Primärkühlmittelkreislauf (12) verbundene Reduktionsstrecke (16) abgeleitet;
c) das Oxidationsmittel wird in der Reduktionsstrecke (16) mit einem Reduktionsmittel unter Bildung einer Reaktionslösung umgesetzt, die vom Oxidationsmittel befreit ist;
d) die Reaktionslösung wird über ein lonenaustauscherharz geleitet, um eine entsalzte Lösung zu bilden; und
e) die entsalzte Lösung wird in das Primärkühlmittel zurückgeleitet und/oder zwischengespeichert und/oder entsorgt.

2. Verfahren nach Anspruch 1, **dadurch gekennzeichnet, dass** das Oxidationsmittel ein Permanganat, vorzugsweise Permangansäure, ist.

3. Verfahren nach einem der vorhergehenden Ansprüche, **dadurch gekennzeichnet, dass** das Reduktionsmittel eine aliphatische Dicarbonsäure, vorzugsweise Oxalsäure, ist.

4. Verfahren nach einem der vorhergehenden Ansprüche, **dadurch gekennzeichnet, dass** der Primärkühlmittelkreislauf (12) wenigstens eine Kühlmittelpumpe (20) mit einer Sperrwasserversorgung (42) umfasst, und dass die Oxidationslösung unter Verwendung der Kühlmittelpumpe (20) im Primärkühlmittelkreislauf (12) zirkuliert wird.

5. Verfahren nach Anspruch 4, **dadurch gekennzeichnet, dass** Sperrwasser der Kühlmittelpumpe (20) zugeführt und in das Primärkühlmittel abgegeben wird, wobei die vorbestimmte Menge der Oxidationslösung, die aus dem Primärkühlmittelkreislauf (12) abgeleitet wird, der Menge des Sperrwassers entspricht, die in das Primärkühlmittel abgegeben wird.

6. Verfahren nach Anspruch 4 oder 5, **dadurch gekennzeichnet, dass** ein Volumenstrom der in die Reduktionsstrecke (16) abgeleiteten Oxidationslösung einem Volumenstrom des während Schritt a) in das Primärkühlmittel abgegebenen Sperrwassers entspricht.

7. Verfahren nach einem der vorhergehenden Ansprüche, **dadurch gekennzeichnet, dass** die Verweilzeit in der Reduktionsstrecke (16) an eine Reaktionszeit der Umsetzung des Oxidationsmittels mit dem Reduktionsmittel angepasst wird, um eine im Wesentlichen vollständige Umsetzung des Oxidationsmittels mit dem Reduktionsmittel in der Reduktionsstrecke (16) zu erzielen.

8. Verfahren nach einem der vorhergehenden Ansprüche, **dadurch gekennzeichnet, dass** die Reduktionsstrecke (16) einen Strömungsrohrreaktor (34) umfasst, wobei die Verweilzeit des Oxidationsmittels und des Reduktionsmittels im Strömungsrohrreaktor (34) gesteuert wird, um eine im Wesentlichen vollständige Umsetzung des Oxidationsmittels mit dem Reduktionsmittel im Strömungsrohrreaktor (34) zu erzielen.

9. Verfahren nach einem der vorhergehenden Ansprüche, **dadurch gekennzeichnet, dass** die Reduktionsstrecke (16) bei Bedarf mit Druck beaufschlagt wird, um eine Ausgasung von Kohlendioxid zu verhindern.

10. Kernreaktor-Abwasserbehandlungsvorrichtung (10) zur Behandlung von Abwasser aus der Dekontamination einer Metalloberfläche in einem Primärkühlmittelkreislauf (12) eines Kernreaktors (14), wobei die Vorrichtung (10) folgendes umfasst:
- eine Ableiteinrichtung (18), die für das Ableiten einer vorbestimmten Menge des ein Oxidationsmittel enthaltenden Primärkühlmittels aus dem Primärkühlmittelkreislauf (12) angepasst ist,
- eine Reduktionsstrecke (16), die mit der Ableiteinrichtung (18) verbunden ist und eine Dosierstelle (26) zum Einbringen eines Reduktionsmittels in die vorbestimmte Menge des abgeleiteten Primärkühlmittels umfasst, und die für die Umsetzung des Reduktionsmittels mit dem Oxidationsmittel im Primärkühlmittel unter Bildung einer Reaktionslösung angepasst ist, und
- einen mit der Reduktionsstrecke (16) verbundenen Ionenaustauscher 36 zur Deionisierung der Reaktionslösung.

11. Kernreaktor-Abwasserbehandlungsvorrichtung nach Anspruch 10, **dadurch gekennzeichnet, dass** der Primärkühlmittelkreislauf (12) wenigstens eine Kühlmittelpumpe (20) mit einer Sperrwasserversorgung (42) umfasst.

12. Kernreaktor-Abwasserbehandlungsvorrichtung nach Anspruch 10 oder 11, **dadurch gekennzeichnet, dass** die Reduktionsstrecke (16) einen wahlweise kontinuierlich betriebenen Reaktionsbehälter (34; 52, 54) umfasst.

13. Kernreaktor-Abwasserbehandlungsvorrichtung nach Anspruch 12, **dadurch gekennzeichnet, dass** der Reaktionsbehälter ein Rührkesselreaktor (52, 54) ist.

14. Kernreaktor-Abwasserbehandlungsvorrichtung nach Anspruch 13, **dadurch gekennzeichnet, dass** die Reduktionsstrecke (16) ferner einen Pufferbehälter umfasst, der mit dem Rührkesselreaktor (52) verbunden ist.

15. Kernreaktor-Abwasserbehandlungsvorrichtung nach Anspruch 12, **dadurch gekennzeichnet, dass** der Reaktionsbehälter einen Strömungsrohrreaktor (34) umfasst.

16. Kernreaktor-Abwasserbehandlungsvorrichtung nach Anspruch 15, **dadurch gekennzeichnet, dass** der Strömungsrohrreaktor (34) eine Länge aufweist, die so bemessen ist, dass eine Verweilzeit der Reaktionslösung im Strömungsrohrreaktor (34) erreicht wird, in der eine im Wesentlichen vollständige Umsetzung des Oxidationsmittels mit dem Reduktionsmittel erfolgt.

17. Kernreaktor-Abwasserbehandlungsvorrichtung nach einem der Ansprüche 10 bis 16, **dadurch gekennzeichnet, dass** der Kernreaktor (14) als ein Druckwasserreaktor, ein Siedewasserreaktor oder ein Schwerwasserreaktor gebaut ist.

18. Verwendung der Kernreaktor-Abwasserbehandlungsvorrichtung (10) nach einem der Ansprüche 10 bis 17 zur Durchführung eines Verfahrens gemäß den Ansprüchen 1 bis 9.

19. Verwendung der Kernreaktor-Abwasserbehandlungsvorrichtung (10) gemäß einem der Ansprüche 10 bis 17 bei einem Verfahren zur Dekontamination einer Metalloberfläche in einem Primärkühlmittelkreislauf (12) eines Kernreaktors (14), die eine Schicht mit einem oder mehreren Metalloxiden sowie Radioisotopen aufweist, wobei das Dekontaminationsverfahren einen oder mehrere Behandlungszyklen umfasst, mit jeweils einem Oxidationsschritt, bei dem ein Oxidationsmittel unter Bildung einer Oxidationslösung in ein Primärkühlmittel im Primärkühlmittelkreislauf eingebracht und die Oxidationslösung im Primärkühlmittelkreislauf zirkuliert wird, um die Oxidationslösung in Kontakt mit der Metalloberfläche zu bringen; einem Reduktionsschritt, bei dem ein Reduktionsmittel in die Oxidationslösung eingebracht und das Oxidationsmittel in der Oxidationslösung reduziert wird; und einem Dekontaminationsschritt, wobei die im Oxidationsschritt behandelte Metalloberfläche mit einem Dekontaminationsmittel in Kontakt gebracht wird, um unter Bildung einer Dekontaminationslösung zumindest einen Teil der Metalloxide und Radioisotope im Primärkühlmittel zu lösen, wobei eine vorbestimmte Menge der im Oxidationsschritt gebildeten Oxidationslösung in die Abwasserbehandlungsvorrichtung (10) abgeleitet wird.

## Claims

1. A method for treating waste water from decontamination of a metal surface in a primary coolant circuit (12) of a nuclear reactor (14) **characterized in that** the method comprises the following steps:
a) an oxidizing agent is introduced into a primary coolant in the primary coolant circuit (12) to form an oxidation solution and the oxidation solution is circulated in the primary coolant circuit (12) to contact the oxidation solution with the metal surface;
b) during or after step a), a predetermined amount of the oxidation solution is discharged from the primary coolant circuit (12) into a reduction zone (16) connected to the primary coolant circuit (12);
c) in the reduction zone (16), the oxidizing agent is reacted with a reducing agent to form a reaction solution freed of the oxidizing agent;
d) the reaction solution is passed over an ion exchange resin to form a desalinated solution; and
e) the desalinated solution is returned into the primary coolant and/or stored temporarily and/or disposed of.

2. The method according to Claim 1, **characterized in that** the oxidizing agent is a permanganate, preferably permanganic acid.

3. The method according to any one of the preceding claims, **characterized in that** the reducing agent is an aliphatic dicarboxylic acid, preferably oxalic acid.

4. The method according to any one of the preceding claims, **characterized in that** the primary coolant circuit (12) comprises at least one coolant pump (20) with a sealing water supply (42), and that the oxidation solution is circulated by means of the coolant pump (20) in the primary coolant circuit (12).

5. The method according to Claim 4, **characterized in that** sealing water is fed to the coolant pump (20) and is released into the primary coolant, wherein the predetermined amount of the oxidation solution, which is discharged from the primary coolant circuit, corresponds to the amount of the sealing water, which is released into the primary coolant.

6. The method according to Claim 4 or 5, **characterized in that** a volume flow of the oxidation solution discharged into the reduction zone (16) corresponds to a volume flow of the sealing water released during step a) into the primary coolant.

7. The method according to any one of the preceding claims, **characterized in that** the dwell time in the reduction zone (16) is adapted to a reaction time of the reaction of the oxidizing agent with the reducing agent, in order to achieve a substantially complete reaction of the oxidizing agent with the reducing agent in the reduction zone (16).

8. The method according to any one of the preceding claims, **characterized in that** the reduction zone (16) comprises a flow tube reactor (34), wherein the dwell time of the oxidizing agent and of the reducing agent in the flow tube reactor (34) is controlled, in order to achieve a substantially complete reaction of the oxidizing agent with the reducing agent in the flow tube reactor (34).

9. The method according to any one of the preceding claims, **characterized in that** the reduction zone (16) is subjected to pressure as required, in order to prevent an outgassing of carbon dioxide.

10. A nuclear reactor waste water treatment apparatus (10) for treating waste water from decontamination of a metal surface in a primary coolant circuit (12) of a nuclear reactor (14), said apparatus (10) comprising:
- a discharge device (18) adapted for discharging a predetermined amount of the primary coolant including an oxidizing agent from the primary coolant circuit (12),
- a reduction zone (16) that is connected to the discharge device (18) and comprises a dosing station (26) for introducing a reducing agent into the predetermined amount of the discharged primary coolant and that is provided for the reaction of the reducing agent with the oxidizing agent in the primary coolant to form a reaction solution, and
- an ion exchanger (36) connected to the reduction zone (16) for deionizing the reaction solution.

11. The nuclear reactor waste water treatment apparatus according to Claim 10, **characterized in that** the primary coolant circuit (12) comprises at least one coolant pump (20) with a sealing water supply (42).

12. The nuclear reactor waste water treatment apparatus according to Claim 10 or 11, **characterized in that** the reduction zone (16) comprises an optionally continuously operated reaction container (34; 52, 54).

13. The nuclear reactor waste water treatment apparatus according to Claim 12, **characterized in that** the reaction container is a stirred-tank reactor (52, 54).

14. The nuclear reactor waste water treatment apparatus according to Claim 13, **characterized in that** the reduction zone (16) furthermore comprises a buffer container, which is connected to the stirred-tank reactor (52).

15. The nuclear reactor waste water treatment apparatus according to Claim 12, **characterized in that** the reaction container comprises a flow tube reactor (34).

16. The nuclear reactor waste water treatment apparatus according to Claim 15, **characterized in that** the flow tube reactor (34) has a length, which is dimensioned, so that a dwell time of the reaction solution in the flow tube reactor (34) is reached, in which a substantially complete reaction of the oxidizing agent with the reducing agent takes place.

17. The nuclear reactor waste water treatment apparatus according to any one of Claims 10 to 16, **characterized in that** the nuclear reactor (14) is built as a pressurized water reactor, a boiling water reactor or a heavy water reactor

18. A use of the nuclear reactor waste water treatment apparatus (10) according to any one of Claims 10 to 17 for implementing a method according to Claims 1 to 9.

19. The use of the nuclear reactor waste water treatment apparatus (10) according to any one of Claims 10 to 17 in a method for the decontamination of a metal surface in a primary coolant circuit (12) of a nuclear reactor (14), which has a layer with one or more metal oxides and radio isotopes, wherein the decontamination method comprises one or more treatment cycles, with in each case an oxidation step, in which an oxidizing agent is introduced into a primary coolant in the primary coolant circuit to form an oxidation solution and the oxidation solution is circulated in the primary coolant circuit, in order to bring the oxidizing agent into contact with the metal surface; a reduction step, in which a reducing agent is introduced into the oxidation solution and the oxidizing agent is reduced in the oxidation solution; and a decontamination step, wherein the metal surface treated in the oxidation step is brought into contact with the decontaminating agent, in order to dissolve at least some of the metal oxides and radio isotopes in the primary coolant to form a decontamination solution, wherein a predetermined amount of the oxidation solution formed in the oxidation step is discharged into the waste water treatment apparatus (10).

## Revendications

1. Procédé pour le traitement des eaux résiduaires de la décontamination d'une surface métallique dans un circuit primaire de refroidissement (12) d'un réacteur nucléaire (14), **caractérisé en ce que** le procédé comprend les étapes suivantes :
a) on introduit un oxydant, avec formation d'une solution d'oxydation, dans un fluide primaire de refroidissement dans le circuit primaire de refroidissement (12), et on fait circuler la solution d'oxydation dans le circuit primaire de refroidissement (12), pour mettre la solution d'oxydation en contact avec la surface métallique ;
b) pendant ou après l'étape a), on dérive du circuit primaire de refroidissement (12) une quantité prédéfinie de la solution d'oxydation, et on l'envoie dans une zone de réduction (16) reliée au circuit primaire de refroidissement (12) ;
c) on fait réagir l'oxydant dans la zone de réduction (16) avec un réducteur, avec formation d'une solution réactionnelle, qui est débarrassée de l'oxydant ;
d) on envoie la solution réactionnelle sur une résine échangeuse d'ions, pour former une solution déminéralisée ; et
e) on renvoie la solution déminéralisée dans le fluide primaire de refroidissement, et/ou on la soumet à un stockage intermédiaire et/ou on l'élimine.

2. Procédé selon la revendication 1, **caractérisé en ce que** l'oxydant est un permanganate, de préférence l'acide permanganique.

3. Procédé selon l'une des revendications précédentes, **caractérisé en ce que** le réducteur est un acide dicarboxylique aliphatique, de préférence l'acide oxalique.

4. Procédé selon l'une des revendications précédentes, **caractérisé en ce que** le circuit primaire de refroidissement (12) comprend au moins une pompe à circulation de réfrigérant (20) comportant une alimentation en eau d'étanchéité (42), et **en ce que** la solution d'oxydation est mise en circulation dans le circuit primaire de refroidissement (12) par utilisation de la pompe à circulation de réfrigérant (20).

5. Procédé selon la revendication 4, **caractérisé en ce que** l'eau d'étanchéité est envoyée à la pompe à circulation de réfrigérant (20) et introduite dans le fluide primaire de refroidissement, la quantité prédéfinie de la solution d'oxydation qui est dérivée du circuit primaire de refroidissement (12) correspondant à la quantité d'eau d'étanchéité qui est introduite dans le fluide primaire de refroidissement.

6. Procédé selon la revendication 4 ou 5, **caractérisé en ce qu'**un débit volumique de la solution d'oxydation envoyée dans la zone de réduction (16) correspond à un débit volumique de l'eau d'étanchéité introduite dans le fluide primaire de refroidissement pendant l'étape a).

7. Procédé selon l'une des revendications précédentes, **caractérisé en ce que** le temps de séjour dans la zone de réduction (16) est adapté à un temps de réaction de la réaction de l'oxydant avec le réducteur, pour réaliser dans la zone de réduction (16) une réaction essentiellement complète de l'oxydant avec le réducteur.

8. Procédé selon l'une des revendications précédentes, **caractérisé en ce que** la zone de réduction (16) comprend un réacteur piston (34), le temps de séjour de l'oxydant et du réducteur dans le réacteur piston (34) étant commandé de façon à réaliser une réaction essentiellement complète de l'oxydant avec le réducteur dans le réacteur piston (34).

9. Procédé selon l'une des revendications précédentes, **caractérisé en ce que** la zone de réduction (16) est à la demande soumise à une pression, pour empêcher un dégazage de dioxyde de carbone.

10. Dispositif (10) de traitement des eaux résiduaires d'un réacteur nucléaire, destiné au traitement des eaux résiduaires de la décontamination d'une surface métallique dans un circuit primaire de refroidissement (12) d'un réacteur nucléaire (14), le dispositif (10) comprenant ce qui suit :
- un dispositif de dérivation (18), qui est adapté à la dérivation, à partir du circuit primaire de refroidissement (12), d'une quantité prédéterminée du fluide primaire de refroidissement contenant un oxydant,
- une zone de réduction (16) qui est reliée au dispositif de dérivation (18) et comprend un poste de dosage (26) destiné à introduire un réducteur dans la quantité prédéfinie du fluide primaire de refroidissement dérivé, et qui est adaptée à la réaction du réducteur avec l'oxydant dans le fluide primaire de refroidissement, avec formation d'une solution réactionnelle, et
- un échangeur d'ions (36), relié à la zone de réduction (16), pour désioniser la solution réactionnelle.

11. Dispositif de traitement des eaux résiduaires d'un réacteur nucléaire selon la revendication 10, **caractérisé en ce que** le circuit primaire de refroidissement (12) comprend au moins une pompe à circulation de réfrigérant (20) comportant une alimentation en eau d'étanchéité (42).

12. Dispositif de traitement des eaux résiduaires d'un réacteur nucléaire selon la revendication 10 ou 11, **caractérisé en ce que** la zone de réduction (16) comprend un récipient de réaction (34 ; 52, 54), exploité éventuellement en continu.

13. Dispositif de traitement des eaux résiduaires d'un réacteur nucléaire selon la revendication 12, **caractérisé en ce que** le récipient de réaction est un réacteur à agitation mécanique (52, 54).

14. Dispositif de traitement des eaux résiduaires d'un réacteur nucléaire selon la revendication 13, **caractérisé en ce que** la zone de réduction (16) comprend en outre un réservoir tampon, qui est relié au réacteur à agitation mécanique (52).

15. Dispositif de traitement des eaux résiduaires d'un réacteur nucléaire selon la revendication 12, **caractérisé en ce que** le récipient de réaction est un réacteur piston (34).

16. Dispositif de traitement des eaux résiduaires d'un réacteur nucléaire selon la revendication 15, **caractérisé en ce que** le réacteur piston (34) présente une longueur qui est telle que l'on atteigne un temps de séjour de la solution réactionnelle dans le réacteur piston (34) au cours duquel a lieu une réaction essentiellement complète de l'oxydant avec le réducteur.

17. Dispositif de traitement des eaux résiduaires d'un réacteur nucléaire selon l'une des revendications 10 à 16, **caractérisé en ce que** le réacteur nucléaire (14) est conçu comme un réacteur à eau sous pression, un réacteur à eau bouillante ou un réacteur à eau lourde.

18. Utilisation du dispositif (10) de traitement des eaux résiduaires d'un réacteur nucléaire selon les revendications 10 à 17 pour la mise en oeuvre d'un procédé selon les revendications 1 à 9.

19. Utilisation du dispositif (10) de traitement des eaux résiduaires d'un réacteur nucléaire selon l'une des revendications 10 à 17 dans un procédé pour la décontamination d'une surface métallique dans un circuit primaire de refroidissement (12) d'un réacteur nucléaire (14), qui présente une couche comportant un ou plusieurs oxydes métalliques ainsi que des radioisotopes, le procédé de décontamination comprenant un ou plusieurs cycles de traitement, chacun comportant une étape d'oxydation, dans laquelle un oxydant est introduit dans le réfrigérant primaire dans le circuit primaire de refroidissement et la solution d'oxydation est mise en circulation dans le circuit primaire de refroidissement, pour mettre la solution d'oxydation en contact avec la surface métallique ; une étape de réduction, dans laquelle un réducteur est introduit dans la solution d'oxydation et l'oxydant est réduit dans la solution d'oxydation ; et une étape de décontamination, la surface métallique traitée dans l'étape d'oxydation étant mise en contact avec un agent de décontamination, pour dissoudre, avec formation d'une solution de décontamination, au moins une partie des oxydes métalliques et des radioisotopes dans le réfrigérant primaire, une quantité prédéterminée de la solution d'oxydation formée dans l'étape d'oxydation étant dérivée dans le dispositif (10) de traitement des eaux résiduaires.
